# EUROPEAN PATENT SPECIFICATION

(11) **EP 4 154 570 B1**
(45) Date of publication and mention of the grant of the patent: **02.12.2026**
(21) Application number: 20939577.1
(22) Date of filing: 09.06.2020
(51) Int. Cl.: H04W 12/80, H04L 9/40

(54) **MANAGING SERVICE INTERRUPTS IN LAWFUL INTERCEPTION**
VERWALTUNG VON DIENSTUNTERBRECHUNGEN BEI LEGALEM ABFANGEN
GESTION D'INTERRUPTIONS DE SERVICE DANS UNE INTERCEPTION LÉGALE

(43) Date of publication of application: 29.03.2023
(73) Proprietor: Telefonaktiebolaget LM ERICSSON (PUBL), 16483 Stockholm (SE)
(72) Inventor: GIORGIO GAGGIA, Antonio, 84127 Salerno (IT); RUSSO, Mariano, 80132 Napoli (IT); SCUDIERO, Dario, 80040 Poggomarino (Napoli) (IT); GAITO, Daniele, 80131 Napoli (NA) (IT); SANTELLA, Chiara, 84014 Nocera Inferiore (IT); GALOTTO, Carmine, 84016 Pagani (SA) (IT)
(74) Representative: Ericsson
(86) International application number: PCT/SE2020/050580
(87) International publication number: WO 2021/251853

(56) References cited:
- WO-A1-2018/143845
- WO-A1-2019/076424
- US-A1- 2003 101 356
- US-A1- 2013 326 631
- US-A1- 2014 073 295
- US-A1- 2014 073 295
- US-A1- 2016 112 261
- "Network Functions Virtualisation (NFV); Security; Report on NFV LI Architecture", vol. ISG - NFV, no. V1.1.1, 6 April 2018 (2018-04-06), pages 1 - 49, XP014328979, Retrieved from the Internet <URL:docbox.etsi.org\ISG\NFV\Open\Publications_pdf\Specs-Reports\NFV-SEC 011v1.1.1 - GR - LI Architecture Report.pdf> [retrieved on 20180406]
- "Lawful Interception (LI); Handover specification for IP delivery; ETSI TS 102 232", TECHNICAL SPECIFICATION, EUROPEAN TELECOMMUNICATIONS STANDARDS INSTITUTE (ETSI), 650 ROUTE DES LUCIOLES, SOPHIA ANTIPOLIS CEDEX, F-06921, FRANCE, vol. LI, no. V1.5.1, 1 October 2006 (2006-10-01), XP014035419

## Description

### TECHNICAL FIELD

Embodiments herein relate to a method performed by a lawful interception function in a telecommunication network, a corresponding computer system as well as a computer program and a carrier of such a computer program.

### BACKGROUND

Lawful interception (LI) of traffic between communicating entities in a telecommunication network involves interaction between several LI functions in a core network that is part of the telecommunication network. For the purpose of the present disclosure, it is enough to mention a few functions such as an LI administrative function (ADMF), a point of interception (POI) within a network element (NE), a mediation function (MF) and a delivery function (DF). The LI functions ADMF, MF and DF form part of what in the following is denoted LI mediation system. As will be exemplified further in the detailed description below, a NE in the present context is an entity in the core network that is involved in the communication activity that is subject to LI. Communication also takes place with one or more law enforcement agencies (LEA), which orders LI monitoring on LI functions by communication with the ADMF, and receives data associated with intercepted communication from the DF.

Communication between such entities, in a LI context, is subject to various standards in the form of technical specifications (TS) set by the European Telecommunications Standards Institute (ETSI), for example, the ETSI TS 102 232 V1.5.1 (2006-10) "Lawful Interception (LI); Handover specification for IP delivery".

One of the things that matters most to LEA's is the business continuity of the LI solution. A LEA therefore requires that the LI mediation system provides a high level of availability in terms of, e.g., minimization of system downtime (i.e. the length of time a LI service is unavailable beyond a maximum length of time) and data loss.

In physical network functions (PNFs), high availability (HA) is implemented with redundant hardware (i.e. computer processors) running redundant instances of each service. In case of failure of hardware running one instance of a service, or in case of a scheduled maintenance activity, the LI mediation system can then perform a failover procedure and switch to use another instance of a service that is running on hardware that did not fail.

In case of upgrade of the database management system (DBMS) in the LI mediation system, instead the LI mediation system must be switched off to guarantee data consistency. In these cases, i.e. SWITCHOVER, FAILOVER, SHUTDOWN/RESTART of the LI mediation system, the LI mediation system notifies these interruptions to the LEA over handover interface 2 (HI2). Moreover, the LI mediation system receives over X1 and X2 info on SWITCHOVER, FAILOVER, SHUTDOWN/RESTART of the POI and sends it to the LEA over HI2.

This interrupt information is important for the agency to understand. For example, it is important for the LEA to know what the consequences of the interruption has been on the LI monitoring already taking place, as well as what the consequences will be on continued LI. For example, in case of POI restart without warrant loss, according to the information received via HI2, the LEA should know that no action is needed and that no LI data has been lost, although eventually some intercept related information (IRI) may be lost during the restart of the POI. On the other hand, if the POI restart was connected also to a warrant loss, the LEA is informed that, until all warrants are re-sent to the POI by the ADMF in the LI mediation system, IRI can be lost.

In prior art telecommunication systems, prior to the evolution of virtualization and cloudification systems, failures in terms of interrupts such as those discussed above were due mainly to hardware faults, and the failure fixing required a switchover to new hardware, and sometimes also a human intervention to replace the hardware.

By the current evolution of virtualization of telecommunication systems, cloud environment and network function virtualization (NFV) standards introduce a substantial shift in the way telecommunication networks are implemented, thereby breaking the link between hardware and software in today's equipment. This is done through the use, on computer servers, of a software abstraction layer called virtualization layer or hypervisor, which allows creation of multiple virtual machines (VM) running different operative systems on the same computer server. With these new technologies, NFV, VM etc., the high availability issues are fully handled by the infrastructure in which the telecommunication system is realized.

In such cloud environments the LI functions are so-called virtualized network functions (VNF) that are decoupled from the hardware, so that the failure reasons and their effects are different from the ones that occur on the prior art PNFs. New events can occur, such as infrastructure faults, and other failure events are changed or not possible anymore. For example, a failure such as switchover is not possible when the high availability issue is totally handled by the infrastructure.

Consequently, failure information associated with PNFs are not applicable for VNFs and LEAs are therefore not able to understand what happened when a failure occurs or which consequences the failure has had or will have on the LI monitoring. This misalignment between the failure event and the reported information to the LEA will mean that the LEA is not informed that events, e.g. IRI and/or content of communication (CC), associated with objects subject to LI could have been lost.

The ETSI group report "ETSIGR NFV-SEC 011 V 1.1.1" provides a study of the virtual functions for supporting LI in ETSI NFV based virtualized networks.

US 2014/073295 A1 discloses LEAs which are connected via interfaces H1-H3 to Mediation Functions for ADMF, Delivery Function 2 (DF2) and Delivery Function 3 (DF3). US 2023/101356 A1 discloses handover interfaces HI1, HI2, and HI3 used to transfer administrative information between an access provider and the LEA via a Law Enforcement Monitoring Facility.

### SUMMARY

In view of the above, an object of the present invention defined by the appended claims is to overcome drawbacks related to failures related to LI service interruption. This object is achieved in a first aspect by a method performed by a service interruption manager function (SIMF) in a telecommunication network.

The SIMF, as well as an ADMF, a POI in a NE, an MF and a DF with which the SIMF communicates, as will be summarized below, are all VNFs in a cloud environment as described above.

The method of the first aspect comprises receiving information that indicates that LI service interruption associated with an LI task has occurred. Based on the received information, a determination is made of a status regarding the LI service interruption associated with the LI task, for example a determination whether the LI service interruption associated with the LI task has a current status that is any of: terminated, ongoing or initiated. A message is then transmitted, to a DF via an HI2 interface, the message comprising at least the determined status regarding the LI service interruption.

The definition of LI service interruption associated with an LI task is to be understood as interruption in the LI service itself. This definition excludes "normal" communication between communicating entities, for example communication services such as media communication sessions that the communicating entities may be involved in and that are being subject of LI.

Such a method enables the DF to convey information about a LI service interruption to the LEA/a LEA device, via the HI2 interface, and thereby enabling the LEA to gain knowledge of the LI service interruption and take any mitigation action that may be necessary. As will be exemplified in the following, this means that the LEA may be kept informed when events on monitored objects (i.e. communicating entities that are subjects of LI) could be lost. Also, the LEA may be kept informed when LI monitoring is working again, after an interruption, without any malfunctions, and the LEA may gain knowledge regarding which problem occurred in relation to the communication between the POI and the LI mediation system.

In some embodiments, the receiving comprises receiving information that indicates that a POI in a NE has experienced LI service interruption associated with an LI task.

In some embodiments, the receiving comprises receiving, from an ADMF via an X1 interface, a message comprising the information that the POI has experienced LI service interruption associated with an LI task. In other embodiments, the receiving comprises receiving, from an MF via an X2 interface, a message comprising the information that the POI has experienced LI service interruption associated with an LI task.

In some embodiments, the receiving comprises receiving, from an ADMF, via an X1 interface, information that indicates that LI service interruption associated with an LI task has occurred.

In other words, various embodiments illustrate that handling of occurrences of LI service interruption may involve handling of interruptions occurring outside the LI mediation system, e.g. interruptions relating to the LI monitoring by the POI, as well as interruptions occurring inside the LI mediation system itself, e.g. interruptions in the ADMF, the MF or the DF.

In some embodiments, the receiving comprises receiving further LI service interruption information that informs about one or more effects of the LI service interruption. This further LI service interruption information comprises one or more of:
- information that indicates a type of the LI service interruption,
- information that indicates a status of at least one entity involved in the LI task that experiences the LI service interruption, and
- information that indicates an impact on at least one entity involved in the LI task that experiences the LI service interruption.

In some embodiments, the transmitting to the DF comprises transmission of at least part of the further LI service interruption information.

In some embodiments, the determining of a status regarding the LI service interruption associated with the LI task comprises analysing at least part of the further LI service interruption information.

In some embodiments, the LI service interruption message is an OperationMessage of the ETSI technical specification 102 232 V1.5.1.

In a further aspect, there is provided a computer system comprising at least a processor and a memory, said memory containing instructions executable by said processor whereby said computer system is operative to perform a method as summarized above.

In yet a further aspect, there is provided a computer program comprising instructions which, when executed on at least one processor in a computer system, cause the computer system to carry out a method as summarized above.

In yet a further aspect, there is provided a carrier, comprising the computer program as summarized above, wherein the carrier is one of an electronic signal, an optical signal, a radio signal and a computer readable storage medium.

These further aspects and embodiments of these further aspects enable the same effects and advantages as summarized above in connection with the method of the first aspect.

### BRIEF DESCRIPTION OF THE DRAWINGS

Figures 1a-b are schematically illustrated block diagrams of LI systems,
figures 2a-b are flowcharts of methods,
figures 3a-c are signaling diagrams illustrating signals transmitted in the methods illustrated in figures 2a-b,
figures 4a-c are flowcharts of methods,
figure 5 schematically illustrates a computer system, and
figure 6 schematically illustrates a computer system.

### DETAILED DESCRIPTION

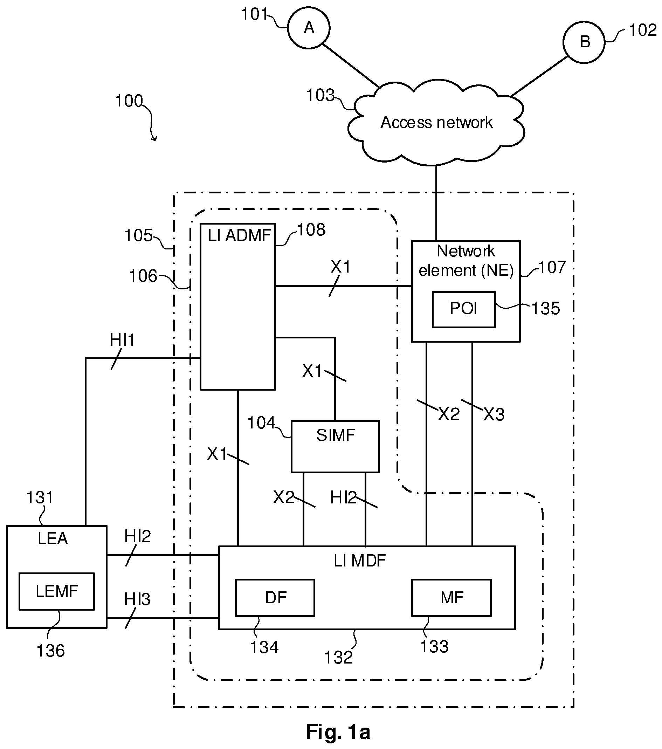

**Figure 1a** schematically illustrates a first functional representation of a telecommunication network 100 comprising a core network 105 and an access network 103 in which two communicating entities, a first communicating entity 101 and a second communicating entity 102 are connected. The access network may, e.g., be in the form of a 3GPP radio access network (RAN) or any other type of non-3GPP communication network that may connect to the core network 105, which may be e.g. an Evolved Packet Core (EPC), a 5G core network (5GC) or any future core network in which the skilled person would understand that the invention can be implemented in.

As the skilled person will realize, communication performed by the first and second communicating entities 101, 102 is enabled by several functional units in both the access network 103 and the core network 105. For the sake of clarity of description, such functional units are not illustrated in full but only schematically represented and exemplified by a network element (NE) 107 that, in a 4G context (e.g. 3GPP Evolved Packet System (EPS), may be a mobility management entity (MME), a serving gateway (S-GW), a packet data network gateway (P-GW) etc. In a 5G context, the network element 107 may, e.g., be in the form of a policy control function (PCF), a user data management function (UDM), an Access and Mobility Management Function (AMF) or a session management function (SMF) etc. The network element may even be an SMS-Function (SMSF).

A common characteristic of such functional units, as represented by network element 107, in the core network 105 is that they may comprise LI functionality in the form of a point of interception (POI) 135. The POI 135 is in figure 1a thus depicted as being a part of the network element 107 or being embedded therein, but the POI 135 may also be separate from the network element 107 with which it is associated. The core network 105 may be the core network of a serving network (SN), which may be a Visited Public Land Mobile Network (VPLMN) or a Home Public Land Mobile Network (HPLMN).

The core network 105 also comprises an administrative function (ADMF) 108 (also called LI ADMF) and a mediation and delivery function (MDF) 132 that connects to a law enforcement agency (LEA) 131. Within the MDF 132 a mediation function (MF) 133 and a delivery function (DF) 134 are configured to handle an intercept product in the form of intercept related information (IRI) and content of communication (CC) received from the POI 135 and provide the IRI and CC to the LEA 131. The LEA 131 manages a LEA communication device in the form of a law enforcement monitoring facility (LEMF) 136, which receives IRI and CC from the DF 134. A service interruption manager function (SIMF) 104 connects to the ADMF 108 and the MDF 132 and it is configured to perform actions related to LI service interruption as discussed herein. As indicated above, an LI mediation system 106 as defined herein comprises the ADMF 108, the MF 133, the DF 134 and the SIMF 104.

Communication between the entities in the telecommunication system 100 takes place via X1, X2, X3, and HI2 interfaces. That is, the ADMF 108 communicates with the MF 133, DF 134, the POI 135 in the NE 107 and the SIMF 104 via the X1 interface. The POI 135 in the NE 107 communicates with the MF 133 via the X2 and X3 interfaces. The SIMF 104 communicates with the MF 133 via an X2 interface that is internal to the LI mediation system 106, and communicates with the DF 134 via the HI2 interface. The ADMF 108 also communicates with the LEA 131 via an HI1 interface and the DF 134 communicates with the LEMF 136 in the LEA 131 via HI2 and HI3 interfaces.

The NE 107, the POI 135, the ADMF 108, the MF 133, the DF 134 as well as the SIMF 104 are all VNFs as discussed above.

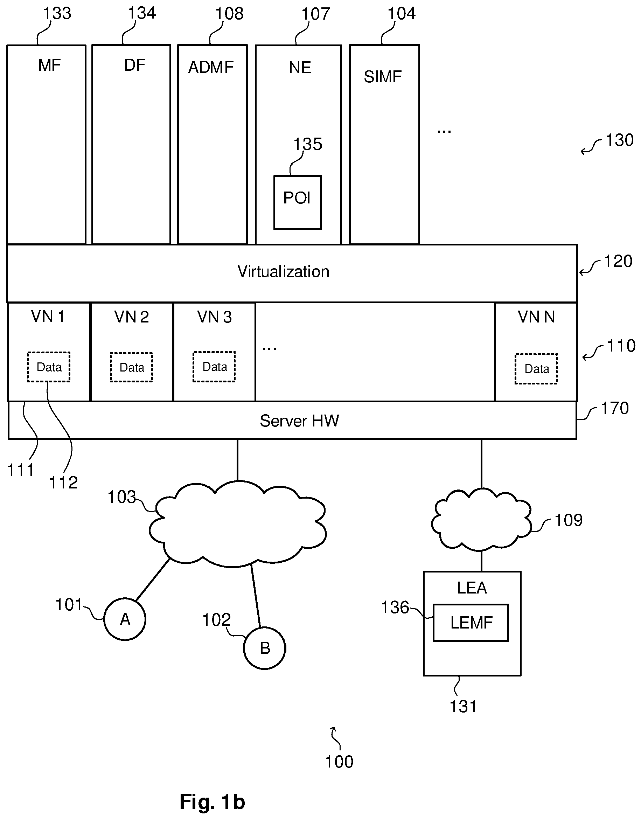

**Figure 1b** schematically illustrates the telecommunication network 100 as it is realized using hardware wherein VNFs are executed on virtual nodes 110 that utilize a hardware server platform 170. The MF 133, the DF 134, the ADMF 108, the NE 107, the POI 135 and the SIMF 104 are realized in a functional layer 130 of VNFs that execute in the virtual nodes 110 via a virtualization layer 120. For example, a virtual node 111 is a collection of software instructions as well as associated data 112 as the skilled person will realize. The LEA 131 with its LEMF 136 is connected to the hardware platform 170 via an intermediate network 109, the details of which are outside the scope of the present disclosure. Although not explicitly illustrated in figure 1b, communication between entities via the X1, X2, X3, HI1, HI2 and HI3 interfaces take place as described above in connection with figure 1a.

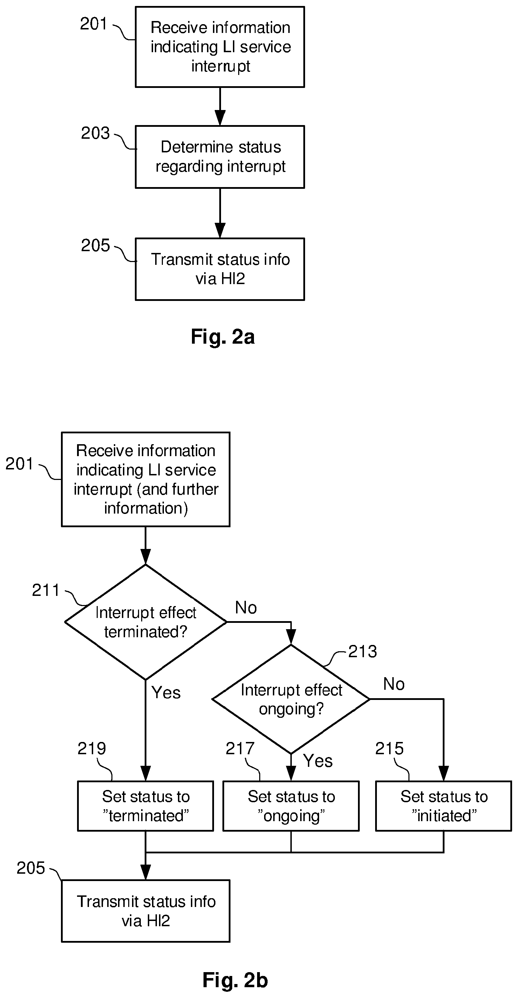

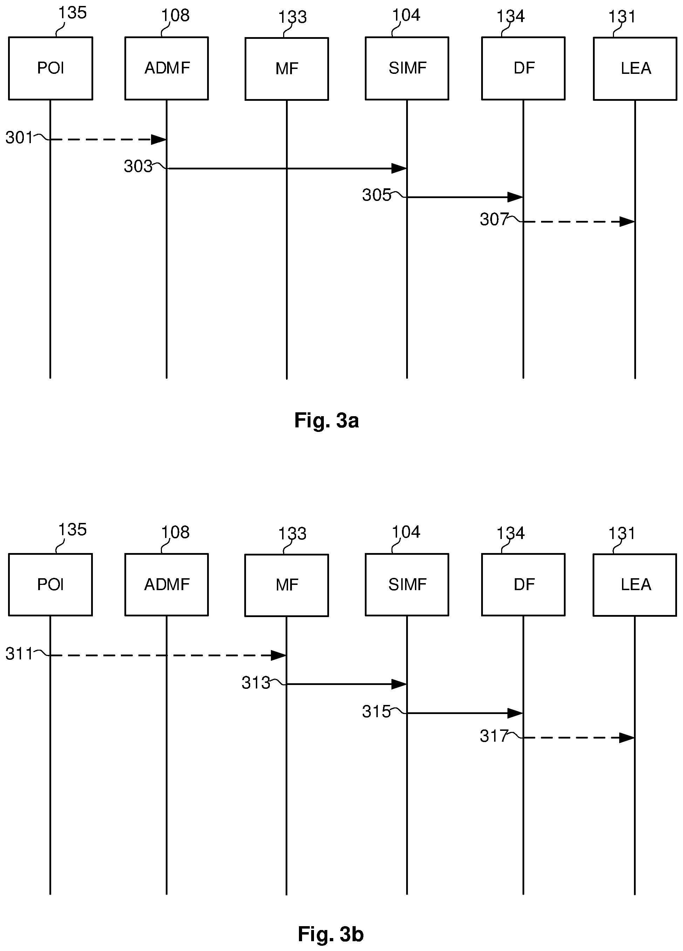

Turning now to figures 2a-b and figures 3a-c, and with continued reference to figures 1a-b, embodiments of methods in the telecommunication network 100 will be described in some more detail. The embodiments will exemplify how the various functional units and interfaces described above may be enhanced in order to provide the effect and advantages associated with LI service interruptions.

**Figure 2a** illustrates a method that comprises actions performed by the SIMF104 in the telecommunication network 100 introduced and described above in connection with figures 1a-b:

### Action 201

The SIMF 104 receives information that indicates that LI service interruption associated with an LI task has occurred.

The receiving in action 201 may comprise receiving information that indicates that the POI 135 in the NE 107 has experienced LI service interruption associated with an LI task.

As exemplified in **figure 3a****,** the reception may comprise receiving, from the ADMF 108 via an X1 interface, a message 303 comprising the information that the POI 135 has experienced LI service interruption associated with an LI task.

As exemplified in **figure 3b****,** the reception may comprise receiving, from the MF 133 via an X2 interface, a message 313 comprising the information that the POI 135 has experienced LI service interruption associated with an LI task.

In other words, such embodiments illustrate that handling of occurrences of LI service interruption may involve handling of interruptions occurring outside the LI mediation system 106, e.g. interruptions relating to the LI monitoring by the POI 135.

Alternatively, the receiving in action 201 may comprise receiving, from the ADMF 108, via the X1 interface, information that indicates that LI service interruption associated with an LI task has occurred. In other words, such embodiments illustrate that handling of occurrences of LI service interruption may involve handling of one or more interruptions occurring inside the LI mediation system 106 itself, e.g. an interruption in the ADMF 108, the MF 133 or the DF 134.

### Action 203

The SIMF 104 determines, based on the information received in action 201, a status regarding the LI service interruption associated with the LI task.

For example, the determination in action 203 may comprise determining whether the LI service interruption associated with the LI task has a current status that is any of terminated, ongoing or initiated.

In other words, the status indicating that the LI service interruption has terminated means that the POI 135 has experienced LI service interruption that has been terminated. Furthermore, the status indicating that the LI service interruption is ongoing means that the POI 135 has experienced LI service interruption that is ongoing, and the status indicating that the LI service interruption is initiated means that the POI 135 has experienced LI service interruption during initiation.

### Action 205

The SIMF 104 transmits, to the DF 134 via the HI2 interface, a message 305, 315 comprising at least the determined (in action 203) status regarding the LI service interruption.

The reception in action 201 may comprise receiving further LI service interruption information that informs about one or more effects of the LI service interruption. Such further LI service interruption information may comprise one or more of:
- information that indicates a type of the LI service interruption, for example internal LI mediation system 106 interruptions such as a restart of the ADMF or the MF, or a lost connection with the NE, as well as interruptions experienced by the POI 135 in the NE such as restart of the NE, loss of NE database, microservice restart etc.,
- information that indicates a status of at least one entity involved in the LI task that experiences the LI service interruption, for example whether an entity is up and running or whether it is down, and
- information that indicates an impact on at least one entity involved in the LI task that experiences the LI service interruption. In other words, such service interruption information exemplifies effects of LI service interruption such as restart of a POI, loss of connection between a POI and an MF etc.

Impact on an entity due to LI service interruption may vary to a large extent. Some ongoing events will not be terminated or part of the event can be lost, and for some ongoing events some of the related IRI's may be lost or not received by the MF 133, and some events sending is delayed, some/all events were lost or some events will be lost. Also, new warrants for LI received from the LEA cannot be accepted (temporarily). Here, "event" means the IRI/CC reporting information from the DF 134 to the LEA 131 about the activity of a target 101, 102 for LI. For example, in case of a call monitored between the first and second communicating entities 101, 102 there should be at least three IRIs: call attempt, call answer and call completion. If the NE 135 restarts it is possible that the call completion will not be generated. For the NE 135 restart time, no new events are generated. If the NE database is lost, during the time LI repopulates the NE database, the events could be not monitored. During ADMF restart, no new warrants for LI can be accepted and during DF/MF 133, 134 restart no IRI can be sent (as they will be delayed or lost).

The transmission in action 205 to the DF 134 may comprise transmission of at least part of the further LI service interruption information exemplified above.

The determination in action 203 of a status regarding the LI service interruption associated with the LI task may comprise analysing at least part of the further LI service interruption information exemplified above. For example, now with reference to figure 2b, the determination in action 203 may comprise actions 211, 213 and 215 as will be described in the following:

### Action 211

A determination is made, based on the received further LI service interruption information, that the one or more effects of the LI service interruption has not terminated.

### Action 213

As a consequence of the determination in action 211, a determination is then made, based on the received further LI service interruption information, that the one or more effects of the LI service interruption is not ongoing.

### Action 215

As a consequence of the determination in action 213, the LI service interruption status is then set to initiated.

Alternatively, as illustrated in figure 2b, the determination in action 203 may comprise actions 211, 213 and 217 as will be described in the following:

### Action 211

A determination is made, based on the received further LI service interruption information, that the one or more effects of the LI service interruption has not terminated.

### Action 213

As a consequence of the determination in action 211, a determination is then made, based on the received further LI service interruption information, that the one or more effects of the LI service interruption is ongoing.

### Action 217

As a consequence of the determination in action 213, the LI service interruption status is then set to ongoing.

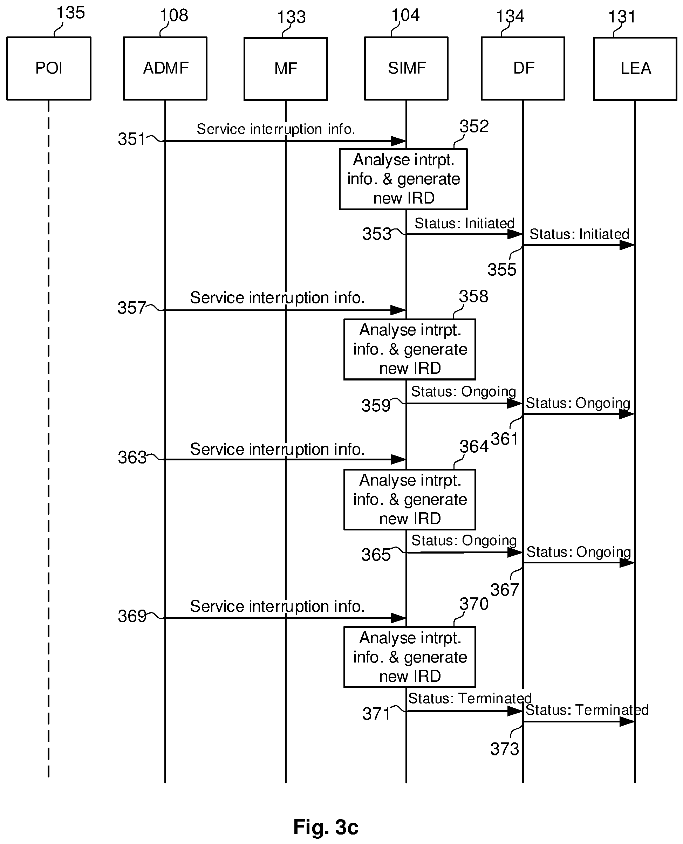

Embodiments may involve an iteration of such determinations that the one or more effects of the LI service interruption is ongoing and such embodiments may comprise reception, in action 201, of updated further LI service interruption information and transmission, in action 205, to the DF 134 of this updated further LI service interruption information. An example of such an embodiment will be described in some more detail below in connection with figure 3c.

Alternatively, as illustrated in figure 2b, the determination in action 203 may comprise actions 211 and 219 as will be described in the following:

### Action 211

A determination is made, based on the received further LI service interruption information, that the one or more effects of the LI service interruption has terminated.

### Action 219

As a consequence of the determination in action 211, the LI service interruption status is then set to terminated.

The LI service interruption message transmitted in action 205 may be an OperationMessage of the ETSI technical specification 102 232 e.g. Version 1.5.1 or any of its corresponding LI service interruption message in a future ETSI technical specification.

**Figure 3c** illustrates an example wherein the ADMF 108 transmits, via the X1 interface, information 351 (denoted "Service interruption info. In figure 3c) to the SIMF 104 that informs the SIMF 104 of an LI service interruption that has occurred during LI performed by the POI 135 (for example, as a consequence of a report by the POI 135 to the ADMF 108, not illustrated in figure 3c). The information 351 is received and analysed by the SIMF 104. The analysis comprises a determination 352 that the LI service interruption has a status that represents the fact that the LI service interruption has been initiated. As a consequence of the determination that the LI service interruption has been initiated, the SIMF generates intercept related data (IRD) 353 that comprises the status information and transmits this IRD 353 via the HI2 interface to the DF 134, which in turn transmits the IRD 355 via the HI2 interface to the LEA 131.

As long as the POI 135 experiences LI service interruption and provides (not illustrated in figure 3c) information about this fact to the ADMF 108, the ADMF 108 transmits, via the X1 interface, information 357, 363 to the SIMF 104 that informs the SIMF 104 about the LI service interruption. The SIMF 104 determines 358, 364 from the received information 357, 363 that the LI service interruption has a status that represents the fact that the LI service interruption is still ongoing. As a consequence of the determination that the LI service interruption is ongoing, the SIMF 104 generates intercept related data 359, 365 that comprises the status information and transmits this IRD 359, 365 via the HI2 interface to the DF 134, which in turn transmits the IRD 361, 367 via the HI2 interface to the LEA 131.

Once the POI 135 no longer experiences LI service interruption it provides (not illustrated in figure 3c) information about this fact to the ADMF 108. The ADMF 108 then transmits, via the X1 interface, information 369 to the SIMF 104 that informs the SIMF 104 about the fact that LI service interruption is no longer experienced by the POI 135. The SIMF 104 determines 370 from the received information 369 that the LI service interruption has a status that represents the fact that the LI service interruption has terminated. As a consequence of the determination that the LI service interruption is terminated, the SIMF 104 generates intercept related data 371 that comprises the status information and transmits this IRD 371 via the HI2 interface to the DF 134, which in turn transmits the IRD 373 via the HI2 interface to the LEA 131.

The sequence of messages and actions exemplified in figure 3c illustrates a case where the POI 135 itself provides information, via the X1 interface, to the ADMF 108 about the fact that the POI 135 has experienced LI service interruption. In another exemplifying case, not illustrated in figure 3c, the SIMF 104 may be informed by the MF 133 by means of IRD transmitted via the X2 interface. In such a case, the SIMF 104 analyses the received IRD and determines that the LI service interruption has a status that represents the fact that the LI service interruption has been initiated, is ongoing or has been terminated, as already described above in connection with figure 3c. In another exemplifying case, the SIMF 104 is provided with the information 351, 357, 363, 369 by the ADMF 108 via the X1 interface about LI service interruption internal to the LI mediation system 106, as discussed above.

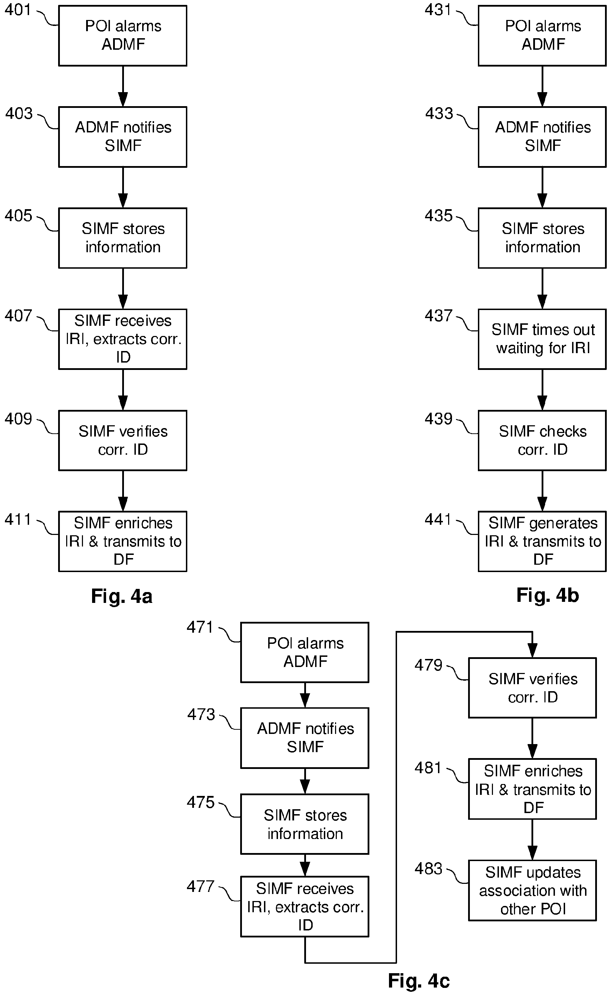

Turning now to **figures 4a****-c** and with continued reference to figure 1a and figure 1b, some use cases will now be described to further exemplify the management of lawful interception service interrupts. These use cases are specific examples of the more generic methods described above in connection with figures 2a-b and 3a-c.

The NE 107 is deployed as a set of microservices that cooperate to fulfil a network function (e.g. handling a call between the communicating entities 101, 102) and send the interception related information (IRI) through the POI 135. As a normal function the SIMF 104 will receive from the MF 133 each HI2 message that the MF 133 mediates from the IRI that the POI 135 sends to the MF 133 together with the POI address they originate from, using an internal X2 interface. The SIMF 104 extracts the correlation identity (ID) from the received IRI and keep track of the association between the correlation ID and the POI address. (Remembering that all interception notification reports (IRI) related to an intercepted session are correlated with each-other through a common correlation ID.) The SIMF 104 removes the correlation ID from the association when it detects that the call ends or when it does not receive IRI for that Correlation ID in a configurable time-period.

In a first use case, as illustrated in figure 4a, the POI 135 experiences a LI service interruption in the form of a restart when performing LI monitoring of the ongoing call between the communicating entities 101, 102. The ongoing call is entirely handled by the same POI. A sequence of actions may then evolve as follows:

### Action 401

The ADMF 108 receives, on the X1 interface, an alarm for the restart of the POI 135, the alarm including also the Internet protocol (IP) address of the failing POI 135. In the context of what has been described above, such an alarm is information that indicates that the POI 135 in the NE 107 has experienced LI service interruption associated with an LI task.

### Action 403

The ADMF 108 notifies the SIMF 104 about the POI 135 restarted together with the POI address. In other words, the SIMF 104 receives information that indicates that LI service interruption associated with an LI task has occurred.

### Action 405

The SIMF 104 stores the IP address information about the restarted POI 135.

### Action 407

Upon reception of IRI and POI IP address from the MF 133, the SIMF 104 extracts the correlation ID from the received IRI.

### Action 409

The SIMF 104 checks the association and verifies that the correlation ID is already present with the same IP address. That is, if the POI IP address of the previously received IRI is equal to the POI IP address of the restarted POI, it means that the POI related to the correlation ID experienced a failure, and the IRI is enriched as described in action 411.

### Action 411

In case the correlation is verified in action 409, the SIMF 104 enriches the IRI received from the MF 133 with the information of "Potential Loss of Data" and transmits this IRI to the DF 134. In case no correlation is verified in action 409, the received IRI is transmitted to the DF 134. In other words, the status regarding the LI service interruption is determined and transmitted to the DF 134. In any case, the SIMF 104 updates the POI address and correlation ID from the association.

In a second use case, as illustrated in figure 4b, the POI 135 has experienced a LI service interruption in the form of a crash when performing LI monitoring of the ongoing call between the communicating entities 101, 102. The ongoing call is no longer reported. A sequence of actions may then evolve as follows:

### Action 431

The ADMF 108 receives, on the X1 interface, an alarm for the crash of the POI 135, the alarm also including the IP address of the failing POI 135. As mentioned above, in the context of what has been described above, such an alarm is information that indicates that the POI 135 in the NE 107 has experienced LI service interruption associated with an LI task.

### Action 433

The ADMF 108 notifies the SIMF 104 about the POI 135 crashed together with the POI address. In other words, the SIMF 104 receives information that indicates that LI service interruption associated with an LI task has occurred.

### Action 435

The SIMF 104 stores the IP address information about the crashed POI 135.

### Action 437

The SIMF 104 awaits IRI reception from the MF 133 and a timeout occurs due to no reception of IRI from the MF 133 (having information that the POI 135 has crashed and is no longer performing LI monitoring).

### Action 439

When the SIMF 104 removes the correlation ID from the internal association due to timeout on IRI reception, the SIMF 104 checks if the correlation ID is associated with the crashed POI 135. That is, if the POI IP address of the previously received IRI is equal to the POI IP address of the crashed POI, it means that the POI related to the correlation ID experienced a failure, and the IRI is created as described in action 441.

### Action 441

In case the correlation ID is associated with the crashed POI 135 as checked in the previous step, the SIMF 104 generates an IRI and provides the generated IRI with the information of "Loss of Data" and transmits this IRI to the DF 134. In other words, the status regarding the LI service interruption is determined and transmitted to the DF 134.

In a third use case, as illustrated in figure 4c, the POI 135 has experienced a LI service interruption in the form of a crash when performing LI of the ongoing call between the communicating entities 101, 102. The ongoing call is subsequently handled by another POI (not illustrated in figures 1a and 1b). A sequence of actions may then evolve as follows:

### Action 471

The ADMF 108 receives, on the X1 interface, an alarm for the crash of the POI 135, the alarm also including the IP address of the failing POI 135. As mentioned above, in the context of what has been described above, such an alarm is information that indicates that the POI 135 in the NE 107 has experienced LI service interruption associated with an LI task.

### Action 473

The ADMF 108 notifies the SIMF 104 about the POI 135 crashed together with the POI address. In other words, the SIMF 104 receives information that indicates that LI service interruption associated with an LI task has occurred.

### Action 475

The SIMF 104 stores the IP address information about the crashed POI 135.

### Action 477

Upon reception of IRI and POI IP address of the other POI (not illustrated in figures 1a and 1b) from the MF 133, the SIMF 104 extracts the correlation ID from the IRI.

### Action 479

The SIMF 104 checks the association and verifies that the correlation ID is already present with a different IP address of the other POI (not illustrated in figures 1a and 1b). That is, if the POI IP address of the previously received IRI is equal to the POI IP address of the crashed POI, it means that the POI related to the correlation ID experienced a failure, and the IRI is enriched as described in action 481.

### Action 481

The SIMF 104 enriches the IRI from the MF 133 with the information of "Potential Loss of Data" and transmits this IRI to the DF 134. In other words, the status regarding the LI service interruption is determined and transmitted to the DF 134.

### Action 483

The SIMF 104 updates the association between correlation ID and new IP address of the other POI (not illustrated in figures 1a and 1b).

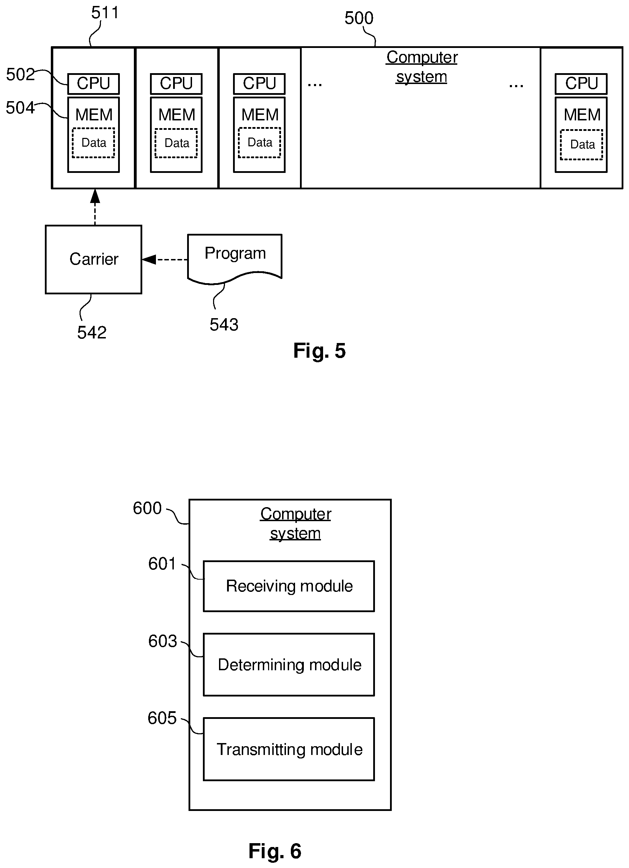

Turning now to **figure 5****,** and with continued reference to figures 1-4, a computer system 500 will be described in some detail. The computer system 500, which may correspond to at least part of the telecommunication network 100, comprises at least a processor 502 and a memory 504. The memory 504 contains instructions executable by the processor 502 whereby the computer system 500 is operative to:
- receive information that indicates that LI service interruption associated with an LI task has occurred,
- determine, based on the received information, a status regarding the LI service interruption associated with the LI task, and
- transmit, to a delivery function (DF) via an HI2 interface, a message comprising at least the determined status regarding the LI service interruption.

In some embodiments, the computer system 500 comprises one or more compute hosts 511, said one or more compute hosts 511 comprising at least a processor 502 and a memory 504.

The instructions that are executable by the processor 502 may be software in the form of a computer program 543. The computer program 543 may be contained in or by a carrier 542, which may provide the computer program 543 to the memory 504 and processor 502. The carrier 542 may be in any suitable form including an electronic signal, an optical signal, a radio signal or a computer readable storage medium.

In some embodiments, the computer system 500 is operative such that the determining comprises determining whether the LI service interruption associated with the LI task has a current status that is any of: terminated, ongoing or initiated.

In some embodiments, the computer system 500 is operative such that the receiving comprises receiving information that indicates that a point of interception (POI) in a network element (NE) has experienced LI service interruption associated with an LI task.

In some embodiments, the computer system 500 is operative such that the receiving comprises receiving, from an administrative function (ADMF), via an X1 interface, a message comprising the information that the POI has experienced LI service interruption associated with an LI task.

In some embodiments, the computer system 500 is operative such that the receiving comprises receiving, from a mediation function (MF), via an X2 interface, a message comprising the information that the POI has experienced LI service interruption associated with an LI task.

In some embodiments, the computer system 500 is operative such that the receiving comprises receiving, from an ADMF, via an X1 interface, information that indicates that LI service interruption associated with an LI task has occurred.

In some embodiments, the computer system 500 is operative such that the receiving comprises receiving further LI service interruption information that informs about one or more effects of the LI service interruption, said further LI service interruption information comprising one or more of:
- information that indicates a type of the LI service interruption,
- information that indicates a status of at least one entity involved in the LI task that experiences the LI service interruption, and
- information that indicates an impact on at least one entity involved in the LI task that experiences the LI service interruption.

In some embodiments, the computer system 500 is operative such that the transmitting to the DF comprises transmission of at least part of the further LI service interruption information.

In some embodiments, the computer system 500 is operative such that the determining a status regarding the LI service interruption associated with the LI task comprises analysing at least part of the further LI service interruption information.

In some embodiments, the computer system 500 is operative to:
- determine, based on the received further LI service interruption information, that the one or more effects of the LI service interruption has not terminated,
- determine, based on the received further LI service interruption information, that the one or more effects of the LI service interruption is not ongoing, and
- set the LI service interruption status to initiated.

In some embodiments, the computer system 500 is operative to:
- determine, based on the received further LI service interruption information, that the one or more effects of the LI service interruption has not terminated,
- determine, based on the received further LI service interruption information, that the one or more effects of the LI service interruption is ongoing, and
- set the LI service interruption status to ongoing.

In some embodiments, the computer system 500 is operative such that the receiving comprises receiving updated further LI service interruption information, and the transmitting to the DF comprises transmission of the updated further LI service interruption information.

In some embodiments, the computer system 500 is operative to:
- determine, based on the received further LI service interruption information, that the one or more effects of the LI service interruption has terminated, and
- set the LI service interruption status to terminated.

In some embodiments, the computer system 500 is operative such that the LI service interruption message is an Operation Message of the European Telecommunications Standards Institute (ETSI) technical specification 102 232 V1.5.1.

Turning now to **figure 6****,** and with continued reference to figures 1 to 5, a computer system 600 will be described in some detail. The computer system 600 comprises:
- a receiving module (601) configured to receive information that indicates that LI service interruption associated with an LI task has occurred,
- a determining module (603) configured to determine, based on the received information, a status regarding the LI service interruption associated with the LI task, and
- a transmitting module (605) configured to transmit, to a delivery function (DF) via an HI2 interface, a message comprising at least the determined status regarding the LI service interruption.

The computer system 600 may comprise further modules that are configured to perform in a similar manner as, e.g., a computer system 500 described above in connection with figure 5.

## Claims

1. A method for enabling a delivery function, DF, to convey information about a lawful interception, LI, service interruption to a law enforcement agency, LEA, the method performed by a computer system comprising a LI, service interruption manager function, SIMF, (104) in a telecommunication network (100), the method comprising:
- receiving (201) information that indicates that LI service interruption associated with an LI task has occurred,
- determining (203), based on the received (201) information, whether a status regarding the LI service interruption associated with the LI task has a current status that is any of: LI service interruption has terminated, LI service interruption is ongoing, or LI service interruption is initiated, and
- transmitting (205), to a delivery function, DF, (134), via an HI2 interface, a message (305, 315) comprising at least the determined (203) status regarding the LI service interruption.

2. The method of claim 1, wherein the receiving (201) comprises receiving information that indicates that a point of interception, POI, (135) in a network element, NE, (107) has experienced LI service interruption associated with an LI task.

3. The method of claim 2, wherein the receiving (201) comprises receiving, from an administrative function, ADMF, (108), via an X1 interface, a message (303) comprising the information that the POI (135) has experienced LI service interruption associated with an LI task.

4. The method of claim 2, wherein the receiving (201) comprises receiving, from a mediation function, MF, (133), via an X2 interface, a message (313) comprising the information that the POI (135) has experienced LI service interruption associated with an LI task.

5. The method of claim 1, wherein the receiving (201) comprises receiving, from an administrative function, ADMF, (108), via an X1 interface, information that indicates that LI service interruption associated with an LI task has occurred.

6. The method of any of claims 1 to 5, wherein the receiving (201) comprises receiving further LI service interruption information that informs about one or more effects of the LI service interruption, said further LI service interruption information comprising one or more of:
- information that indicates a type of the LI service interruption,
- information that indicates a status of at least one entity involved in the LI task that experiences the LI service interruption, and
- information that indicates an impact on at least one entity involved in the LI task that experiences the LI service interruption.

7. The method of claim 6, wherein the transmitting (205) to the DF (134) comprises transmission of at least part of the further LI service interruption information.

8. The method of claim 6 or claim 7, wherein the determining (203) a status regarding the LI service interruption associated with the LI task comprises analysing at least part of the further LI service interruption information.

9. The method of claim 8, comprising:
- determining (211), based on the received further LI service interruption information, that the one or more effects of the LI service interruption has not terminated,
- determining (213), based on the received further LI service interruption information, that the one or more effects of the LI service interruption is not ongoing, and
- setting (215) the LI service interruption status to initiated.

10. The method of claim 8, comprising:
- determining (211), based on the received further LI service interruption information, that the one or more effects of the LI service interruption has not terminated,
- determining (213), based on the received further LI service interruption information, that the one or more effects of the LI service interruption is ongoing, and
- setting (217) the LI service interruption status to ongoing.

11. The method of claim 10, wherein:
- the receiving (201) comprises receiving updated further LI service interruption information, and
- the transmitting (205) to the DF (134) comprises transmission of the updated further LI service interruption information.

12. The method of claim 8, comprising:
- determining (211), based on the received further LI service interruption information, that the one or more effects of the LI service interruption has terminated, and
- setting (219) the LI service interruption status to terminated.

13. The method of any of claims 1 to 12, wherein the LI service interruption message (305, 315) is:
- an Operation Message of the European Telecommunications Standards Institute, ETSI, technical specification 102 232 V1.5.1.

14. A computer system (500) comprising at least a processor (502) and a memory (504), said memory (504) containing instructions executable by said processor (502) whereby said computer system (500) is operative to perform a method according to any of claims 1 to 13

15. The computer system (500) of claim 14, comprising one or more compute hosts (511), said one or more compute hosts (511) comprising at least a processor (502) and a memory (504).

16. A computer program (543) comprising instructions which, when executed on at least one processor (502) in a computer system (500), cause the computer system (500) to carry out the method according to any one of claims 1 to 13.

17. A carrier (542), comprising the computer program (543) of claim 16, wherein the carrier is one of an electronic signal, an optical signal, a radio signal and a computer readable storage medium.

## Patentansprüche

1. Verfahren zum Ermöglichen einer Übermittlungsfunktion, DF, um Informationen über eine Dienstunterbrechung bei legalem Abfangen, LI, an eine Strafverfolgungsbehörde, LEA, weiterzuleiten, wobei das Verfahren von einem Computersystem durchgeführt wird, das eine LI-Dienstunterbrechungs-Managerfunktion, SIMF, (104) in einem Telekommunikationsnetz (100) umfasst, wobei das Verfahren Folgendes umfasst:
- Empfangen (201) von Informationen, die angeben, dass eine LI-Dienstunterbrechung in Verbindung mit einer LI-Aufgabe aufgetreten ist,
- Bestimmen (203), basierend auf den empfangenen (201) Informationen, ob ein Status in Bezug auf die LI-Dienstunterbrechung in Verbindung mit der LI-Aufgabe einen aktuellen Status aufweist, der einer der Folgenden ist: LI-Dienstunterbrechung wurde beendet, LI-Dienstunterbrechung dauert an oder LI-Dienstunterbrechung wurde initiiert und
- Übertragen (205), an eine Übermittlungsfunktion, DF, (134), über eine HI2-Schnittstelle, einer Nachricht (305, 315), die mindestens den bestimmten (203) Status in Bezug auf die LI-Dienstunterbrechung umfasst.

2. Verfahren nach Anspruch 1, wobei das Empfangen (201) Empfangen von Informationen umfasst, die angeben, dass ein Abfangpunkt, POI, (135) in einem Netzelement, NE, (107) eine LI-Dienstunterbrechung in Verbindung mit einer LI-Aufgabe erfahren hat.

3. Verfahren nach Anspruch 2, wobei das Empfangen (201) Empfangen, von einer administrativen Funktion, ADMF, (108), über eine X1-Schnittstelle, einer Nachricht (303) umfasst, welche die Information umfasst, dass der POI (135) eine LI-Dienstunterbrechung in Verbindung mit einer LI-Aufgabe erfahren hat.

4. Verfahren nach Anspruch 2, wobei das Empfangen (201) Empfangen, von einer Vermittlungsfunktion, MF, (133), über eine X2-Schnittstelle, einer Nachricht (313) umfasst, welche die Information umfasst, dass der POI (135) eine LI-Dienstunterbrechung in Verbindung mit einer LI-Aufgabe erfahren hat.

5. Verfahren nach Anspruch 1, wobei das Empfangen (201) Empfangen, von einer administrativen Funktion, ADMF, (108), über eine X1-Schnittstelle, von Informationen umfasst, die angeben, dass eine LI-Dienstunterbrechung in Verbindung mit einer LI-Aufgabe aufgetreten ist.

6. Verfahren nach einem der Ansprüche 1 bis 5, wobei das Empfangen (201) Empfangen weiterer Informationen zur LI-Dienstunterbrechung umfasst, die über einen oder mehrere Effekte der LI-Dienstunterbrechung informieren, wobei die weiteren Informationen zur LI-Dienstunterbrechung eines oder mehrere der Folgenden umfassen:
- Informationen, die eine Art der LI-Dienstunterbrechung angeben,
- Informationen, die einen Status von mindestens einer Einheit, die an der LI-Aufgabe, welche die LI-Dienstunterbrechung erfährt, beteiligt ist, angeben, und
- Informationen, die eine Auswirkung auf mindestens eine Einheit, die an der LI-Aufgabe, welche die LI-Dienstunterbrechung erfährt, beteiligt ist, angeben.

7. Verfahren nach Anspruch 6, wobei das Übertragen (205) an die DF (134) Übertragung von mindestens einem Teil der weiteren Informationen zur LI-Dienstunterbrechung umfasst.

8. Verfahren nach Anspruch 6 oder Anspruch 7, wobei das Bestimmen (203) eines Status in Bezug auf die LI-Dienstunterbrechung in Verbindung mit der LI-Aufgabe Analysieren von mindestens einem Teil der weiteren Informationen zur LI-Dienstunterbrechung umfasst.

9. Verfahren nach Anspruch 8, umfassend:
- Bestimmen (211), basierend auf den empfangenen weiteren Informationen zur LI-Dienstunterbrechung, dass der eine oder die mehreren Effekte der LI-Dienstunterbrechung nicht beendet wurden,
- Bestimmen (213), basierend auf den empfangenen weiteren Informationen zur LI-Dienstunterbrechung, dass der eine oder die mehreren Effekte der LI-Dienstunterbrechung nicht andauern, und
- Setzen (215) des Status der LI-Dienstunterbrechung auf initiiert.

10. Verfahren nach Anspruch 8, umfassend:
- Bestimmen (211), basierend auf den empfangenen weiteren Informationen zur LI-Dienstunterbrechung, dass der eine oder die mehreren Effekte der LI-Dienstunterbrechung nicht beendet wurden,
- Bestimmen (213), basierend auf den empfangenen weiteren Informationen zur LI-Dienstunterbrechung, dass der eine oder die mehreren Effekte der LI-Dienstunterbrechung andauern, und
- Setzen (217) des Status der LI-Dienstunterbrechung auf andauernd.

11. Verfahren nach Anspruch 10, wobei:
- das Empfangen (201) Empfangen aktualisierter weiterer Informationen zur LI-Dienstunterbrechung umfasst und
- das Übertragen (205) an die DF (134) Übertragung der aktualisierten weiteren Informationen zur LI-Dienstunterbrechung umfasst.

12. Verfahren nach Anspruch 8, umfassend:
- Bestimmen (211), basierend auf den empfangenen weiteren Informationen zur LI-Dienstunterbrechung, dass der eine oder die mehreren Effekte der LI-Dienstunterbrechung beendet wurden, und
- Setzen (219) des Status der LI-Dienstunterbrechung auf beendet.

13. Verfahren nach einem der Ansprüche 1 bis 12, wobei die LI-Dienstunterbrechungsnachricht (305, 315) Folgendes ist:
- eine Betriebsnachricht gemäß der technischen Spezifikation 102 232 V1.5.1 des Europäischen Instituts für Telekommunikationsnormen, ETSI.

14. Computersystem (500), umfassend mindestens einen Prozessor (502) und einen Speicher (504), wobei der Speicher (504) Anweisungen enthält, die durch den Prozessor (502) ausführbar sind, wobei das Computersystem (500) dazu betreibbar ist, ein Verfahren nach einem der Ansprüche 1 bis 13 durchzuführen.

15. Computersystem (500) nach Anspruch 14, umfassend einen oder mehrere Rechenhosts (511), wobei der eine oder die mehreren Rechenhosts (511) mindestens einen Prozessor (502) und einen Speicher (504) umfassen.

16. Computerprogramm (543), umfassend Anweisungen, die, wenn sie auf mindestens einem Prozessor (502) in einem Computersystem (500) ausgeführt werden, das Computersystem (500) dazu veranlassen, das Verfahren nach einem der Ansprüche 1 bis 13 umzusetzen.

17. Träger (542), umfassend das Computerprogramm (543) nach Anspruch 16, wobei der Träger eines von einem elektronischen Signal, einem optischen Signal, einem Funksignal und einem computerlesbaren Speichermedium ist.

## Revendications

1. Procédé pour permettre à une fonction de livraison, DF, d'acheminer des informations concernant une interruption de service d'interception légale, LI, vers un organisme chargé de l'application de la loi, LEA, le procédé étant réalisé par un système informatique comprenant une fonction de gestionnaire d'interruption de service, SIMF, de LI (104) dans un réseau de télécommunication (100), le procédé comprenant :
- la réception (201) d'informations qui indiquent qu'une interruption de service de LI associée à une tâche de LI s'est produite,
- la détermination (203), sur la base des informations reçues (201), si un statut concernant l'interruption de service de LI associée à la tâche de LI a un statut actuel qui est l'un quelconque parmi : une interruption de service de LI s'est terminée, une interruption de service de LI est en cours, ou une interruption de service de LI est initiée, et
- la transmission (205), à une fonction de livraison, DF, (134), par l'intermédiaire d'une interface HI2, d'un message (305, 315) comprenant au moins le statut déterminé (203) concernant l'interruption de service de LI.

2. Procédé selon la revendication 1, dans lequel la réception (201) comprend la réception d'informations qui indiquent qu'un point d'interception, POI, (135) dans un élément de réseau, NE, (107) a subi une interruption de service de LI associée à une tâche de LI.

3. Procédé selon la revendication 2, dans lequel la réception (201) comprend la réception, en provenance d'une fonction administrative, ADMF, (108), par l'intermédiaire d'une interface X1, d'un message (303) comprenant les informations selon lesquelles le POI (135) a subi une interruption de service de LI associée à une tâche de LI.

4. Procédé selon la revendication 2, dans lequel la réception (201) comprend la réception, en provenance d'une fonction de médiation, MF, (133), par l'intermédiaire d'une interface X2, d'un message (313) comprenant les informations selon lesquelles le POI (135) a subi une interruption de service de LI associée à une tâche de LI.

5. Procédé selon la revendication 1, dans lequel la réception (201) comprend la réception, en provenance d'une fonction administrative, ADMF, (108), par l'intermédiaire d'une interface X1, d'informations qui indiquent qu'une interruption de service de LI associée à une tâche de LI s'est produite.

6. Procédé selon l'une quelconque des revendications 1 à 5, dans lequel la réception (201) comprend la réception d'informations supplémentaires d'interruption de service de LI qui informent d'un ou plusieurs effets de l'interruption de service de LI, lesdites informations supplémentaires d'interruption de service de LI comprenant un ou plusieurs parmi :
- des informations qui indiquent un type de l'interruption de service de LI,
- des informations qui indiquent un statut d'au moins une entité impliquée dans la tâche de LI qui subit l'interruption de service de LI, et
- des informations qui indiquent un impact sur au moins une entité impliquée dans la tâche de LI qui subit l'interruption de service de LI.

7. Procédé selon la revendication 6, dans lequel la transmission (205) à la DF (134) comprend la transmission d'au moins une partie des informations supplémentaires d'interruption de service de LI.

8. Procédé selon la revendication 6 ou 7, dans lequel la détermination (203) d'un statut concernant l'interruption de service de LI associée à la tâche de LI comprend l'analyse d'au moins une partie des informations supplémentaires d'interruption de service de LI.

9. Procédé selon la revendication 8, comprenant :
- la détermination (211), sur la base des informations supplémentaires d'interruption de service de LI reçues, que l'un ou plusieurs effets de l'interruption de service de LI ne se sont pas terminés,
- la détermination (213), sur la base des informations supplémentaires d'interruption de service de LI reçues, que l'un ou plusieurs effets de l'interruption de service de LI ne sont pas en cours, et
- le réglage (215) du statut d'interruption de service de LI sur initiée.

10. Procédé selon la revendication 8, comprenant :
- la détermination (211), sur la base des informations supplémentaires d'interruption de service de LI reçues, que l'un ou plusieurs effets de l'interruption de service de LI ne se sont pas terminés,
- la détermination (213), sur la base des informations supplémentaires d'interruption de service de LI reçues, que l'un ou plusieurs effets de l'interruption de service de LI sont en cours, et
- le réglage (217) du statut d'interruption de service de LI sur en cours.

11. Procédé selon la revendication 10, dans lequel :
- la réception (201) comprend la réception d'informations supplémentaires d'interruption de service de LI mises à jour, et
- la transmission (205) à la DF (134) comprend la transmission des informations supplémentaires d'interruption de service de LI mises à jour.

12. Procédé selon la revendication 8, comprenant :
- la détermination (211), sur la base des informations supplémentaires d'interruption de service de LI reçues, que l'un ou plusieurs effets de l'interruption de service de LI se sont terminés, et
- le réglage (219) du statut d'interruption de service de LI sur terminée.

13. Procédé selon l'une quelconque des revendications 1 à 12, dans lequel le message d'interruption de service de LI (305, 315) est :
- un message d'opération de la spécification technique 102 232 V1.5.1 de l'Institut européen des normes de télécommunication, ETSI.

14. Système informatique (500) comprenant au moins un processeur (502) et une mémoire (504), ladite mémoire (504) contenant des instructions exécutables par ledit processeur (502), moyennant quoi ledit système informatique (500) est fonctionnel pour la réalisation d'un procédé selon l'une quelconque des revendications 1 à 13.

15. Système informatique (500) selon la revendication 14, comprenant un ou plusieurs hôtes de calcul (511), lesdits un ou plusieurs hôtes de calcul (511) comprenant au moins un processeur (502) et une mémoire (504).

16. Programme informatique (543) comprenant des instructions qui, lorsqu'elles sont exécutées sur au moins un processeur (502) dans un système informatique (500), amènent le système informatique (500) à réaliser le procédé selon l'une quelconque des revendications 1 à 13.

17. Support (542), comprenant le programme informatique (543) selon la revendication 16, dans lequel le support est l'un parmi un signal électronique, un signal optique, un signal radio et un support de stockage lisible par ordinateur.
